(19) **Europäisches Patentamt / European Patent Office / Office européen des brevets**

(11) **EP 2 325 149 B1**

(12) **EUROPEAN PATENT SPECIFICATION**

(45) Date of publication and mention
of the grant of the patent:
**07.10.2015 Bulletin 2015/41**

(51) Int Cl.:
*C04B 35/18* *(2006.01)*  *C04B 35/80* *(2006.01)*
*C04B 38/00* *(2006.01)*  *C04B 35/19* *(2006.01)*
*C04B 35/195* *(2006.01)*  *C04B 37/00* *(2006.01)*
*C04B 35/626* *(2006.01)*

(21) Application number: **10173218.8**

(22) Date of filing: **18.08.2010**

(54) **Manufacturing method of honeycomb structural body**

Herstellungsverfahren für eine Wabenstrukturkörper

Procédé de fabrication de corps structurels en nid d'abeille

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **19.11.2009 PCT/JP2009/069662**

(43) Date of publication of application:
**25.05.2011 Bulletin 2011/21**

(73) Proprietor: **Ibiden Co., Ltd.**
**Ogaki-shi**
**Gifu 503-8604 (JP)**

(72) Inventors:
• **Kunieda, Masafumi**
**Gifu 501-0695 (JP)**
• **Matsukawa, Yosuke**
**Gifu 501-0695 (JP)**

(74) Representative: **Müller-Boré & Partner**
**Patentanwälte PartG mbB**
**Friedenheimer Brücke 21**
**80639 München (DE)**

(56) References cited:
**EP-A1- 2 127 729**    **EP-A2- 2 123 614**
**JP-A- 2004 084 494**    **JP-A- 2007 315 328**

**Description**

BACKGROUND OF THE INVENTION

1. Field of the Invention

The present invention relates to a method of manufacturing a honeycomb structural body for treating exhaust gas.

2. Description of the Related Art

Many techniques have been developed for purifying (converting) exhaust gas that is discharged from automobiles. However, as the traffic volume is increasing, the conventional measures for countering exhaust gas are becoming insufficient. Both domestically and internationally, exhaust gas regulations are being increasingly intensified. Regulations on NOx in diesel exhaust gas are particularly being intensified. Conventionally, NOx has been reduced by controlling the engine's combustion system; however, this measure is becoming insufficient. In order to counter such problems, an NOx reduction system that is implemented by adding a urea aqueous solution (referred to as a urea SCR system) has been proposed as a diesel NOx conversion system. A honeycomb structural body is known as the catalyst carrier used in this system.

For example, a honeycomb structural body has plural cells (through holes) extending from one end face to the another end face of the honeycomb structural body in a longitudinal direction. These cells are partitioned from each other by cell walls supporting a catalyst. Accordingly, when exhaust gas flows through the honeycomb structural body, the NOx included in the exhaust gas is converted by the catalyst supported on the cell walls, and therefore the exhaust gas can be treated.

Generally, such a honeycomb structural body is formed with cordierite. Furthermore, the cell walls support a catalyst such as zeolite (that has undergone ion-exchange with iron, copper, or the like). The honeycomb structural body itself may be formed with zeolite (see, for example, patent document 1).

Patent document 1: Japanese Laid-Open Patent Application No. S61-171539

Document JP 2007 315328 A discloses a structure for diesel exhaust gas purification provided with a nitrogen oxide (NOx) purification body, an NOx purification body with an NOx selection reduced type catalyst containing a transition metal (such as iron) supported by zeolite, as well as a manufacturing method of such an NOx oxide selection reduced type catalyst, wherein the chloride of transition metal is impregnated into zeolite in an aqueous solution. Zeolites that have undergone iron ion-exchange are heated to 400 °C to 700 °C under inert-gas atmosphere (such nitrogen gas atmosphere). Fe carrying zeolite catalysts are coated on the honeycomb shape and an NOx purification body is prepared.

The honeycomb structural body used in the urea SCR system is manufactured as follows. First, a honeycomb molded body is extruded from a raw material paste including zeolite as inorganic particles, an inorganic binder, and inorganic fiber as a reinforcement material. Then, the honeycomb molded body is subjected to a firing process. The zeolite has undergone ion-exchange by combining the aluminum sites ($Al^-$) in the zeolite with iron ions ($Fe^{3+}$), in order to cause a NOx reduction reaction. The urea SCR system is required to have high NOx conversion efficiency with a smaller volume. Therefore, a larger amount of iron ions ($Fe^{3+}$) are preferably used to perform ion-exchange on the aluminum sites ($Al^-$) in the zeolite.

SUMMARY OF THE INVENTION

The present invention provides a method of manufacturing a honeycomb structural body, in which one or more of the above-described disadvantages are eliminated.

A preferred embodiment of the present invention provides a honeycomb structural body having high NOx conversion performance.

An embodiment of the present invention provides a method of manufacturing a honeycomb structural body including at least one honeycomb unit including plural cells extending from a first end face to a second end face in a longitudinal direction, the plural cells being partitioned by cell walls, the at least one honeycomb unit including zeolite particles that have undergone iron ion-exchange, the method including (a) a step of performing a heat treatment on the zeolite particles that have undergone the iron ion-exchange, the heat treatment being performed in a non-oxygenated atmosphere having a temperature within a range of 500 °C through 800 °C, to obtain heat-treated zeolite particles; (b) a step of forming at least one honeycomb molded body from a raw material including the heat-treated zeolite particles; and (c) a step of manufacturing the at least one honeycomb unit by firing the at least one honeycomb molded body.

In the method according to an embodiment of the present invention, the non-oxygenated atmosphere can be a nitrogen atmosphere.

In the method according to an embodiment of the present invention, the step (c) can be performed at a temperature within a range of 700 °C through 1000 °C.

In the method according to an embodiment of the present invention, the raw material can further include an inorganic binder, and, at least one of inorganic fiber and inorganic flaky substances.

The inorganic binder can include at least one kind selected from a group consisting of alumina sol, silica sol, titania sol, liquid glass, sepiolite, attapulgite, and boehmite.

The inorganic fiber can be at least one kind selected from a group consisting of alumina, silica, silicon carbide, silica alumina, glass, potassium titanate, and aluminum borate.

The inorganic flaky substances can be at least one kind selected from a group consisting of glass flakes, mica flakes, alumina flakes, silica flakes, and zinc oxide flakes.

The method according to an embodiment of the present invention can further include (d) a step of forming an assembly having a predetermined shape by joining together plural of the honeycomb units by interposing adhesive layers, which is performed after the step (c).

In the method according to an embodiment of the present invention, the honeycomb structural body can be formed with a single honeycomb unit.

According to one embodiment of the present invention, a honeycomb structural body having high NOx conversion performance is provided.

BRIEF DESCRIPTION OF THE DRAWINGS

Other objects, features and advantages of the present invention will become more apparent from the following detailed description when read in conjunction with the accompanying drawings, in which:

FIG. 1 is a schematic perspective view of an example of a honeycomb structural body according to the present invention;

FIG. 2 is a schematic perspective view of a honeycomb unit forming the honeycomb structural body shown in FIG. 1;

FIG. 3 is an example flowchart of a method of manufacturing a honeycomb structural body according to the present invention; and

FIG. 4 is a schematic perspective view of other example of a honeycomb structural body according to the present invention.

DETAILED DESCRIPTION OF THE PREFERRED EMBODIMENTS

A description is given, with reference to the accompanying drawings, of embodiments of the present invention.

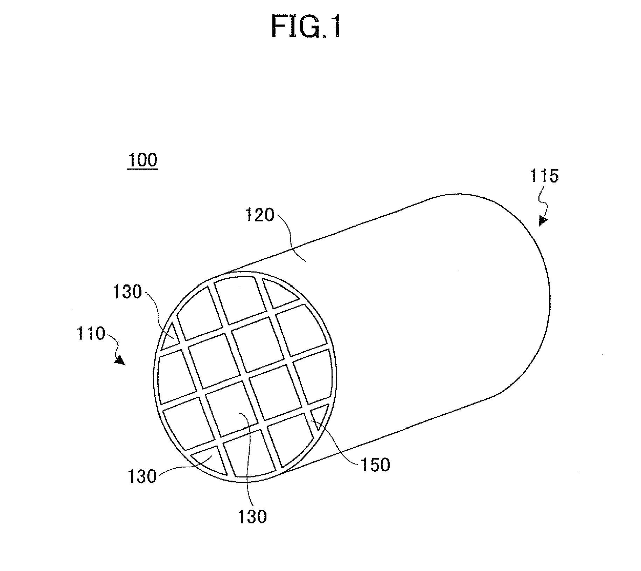

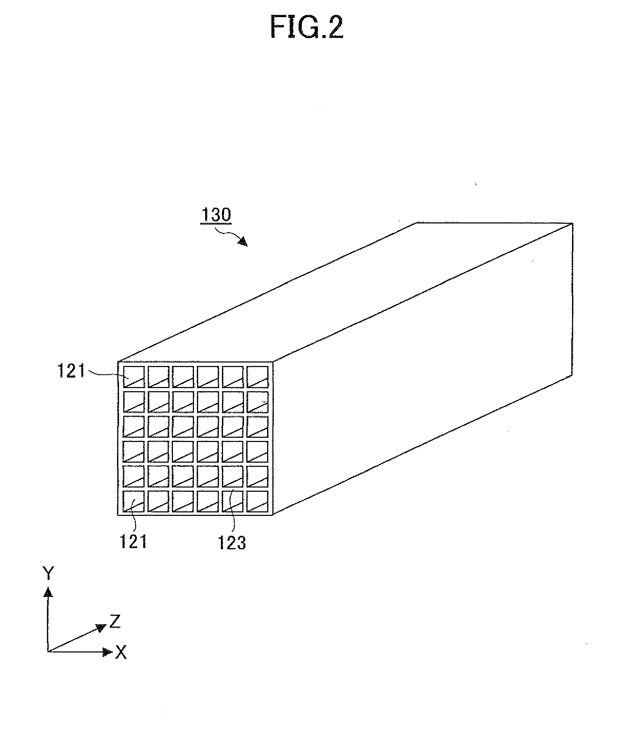

FIG. 1 schematically illustrates an example of a honeycomb structural body used as a catalyst carrier for NOx conversion. FIG. 2 illustrates an example of a honeycomb unit that is a basic unit of the honeycomb structural body shown in FIG. 1.

As shown in FIG. 1, a honeycomb structural body 100 has two end faces 110 and 115. The peripheral surface of the honeycomb structural body 100 is provided with a coat layer 120, except for the two end faces.

The following describes an example of how the honeycomb structural body 100 is formed. FIG. 2 illustrates a pillar-shaped honeycomb unit 130 made of ceramics. Plural honeycomb units 130 (the example shown in FIG. 1 includes four horizontal rows and four vertical rows, i.e., a total of 16 honeycomb units) are joined together by interposing adhesive layers 150. Then, the periphery is cut into a predetermined shape (a cylindrical shape in the example shown in FIG. 1).

As shown in FIG. 2, the honeycomb unit 130 has plural cells (through holes) 121 that are open at both end faces, and that extend in a longitudinal direction from one end to the another end of the honeycomb unit 130. Furthermore, the cells 121 are partitioned by cell walls 123. In the example shown in FIG. 2, a cross-sectional shape perpendicular to the longitudinal direction (Z direction) of the cell 121 is a substantially square shape, although the present invention is not so limited.

The honeycomb structural body 100 having the above configuration is used as a catalyst carrier of a urea SCR system having a urea tank, for example.

The honeycomb unit 130 is formed with zeolite that has undergone iron ion-exchange (ion-conversion). The zeolite functions as a catalyst for NOx conversion reaction. Accordingly, when exhaust gas flows through a urea SCR system including the honeycomb structural body 100 functioning as a catalyst carrier, the urea in a urea tank reacts to the water in the exhaust gas, and ammonia is generated (formula (1)).

$$CO(NH_2)_2 + H_2O \rightarrow 2NH_3 + CO_2 \qquad \text{formula (1)}$$

When the generated ammonia flows into the cells together with the exhaust gas including NOx from one of the end faces of the honeycomb structural body 100 (for example, the end face 110), the reactions expressed by formula (2-1) and formula (2-2) occur due to the function of the catalyst in the zeolite.

$$4NH_3 + 4NO + O_2 \rightarrow 4N_2 + 6H_2O \qquad \text{formula (2-1)}$$

$$8NH_3 + 6NO_2 \rightarrow 7N_2 + 12H_2O \qquad \text{formula (2-2)}$$

Then, the exhaust gas that has been converted is discharged from the another end face of the honeycomb structural body 100 (for example, the end face 115). By making the exhaust gas flow through the honeycomb structural body 100, the NOx in the exhaust gas can be treated.

When manufacturing a honeycomb structural body by extruding a honeycomb molded body from a raw material paste including zeolite as inorganic particles, an inorganic binder, and inorganic fiber as a reinforcement material, and performing firing process on the honeycomb molded body, the zeolite included in the raw material has the following feature. Specifically, the zeolite has undergone ion-exchange by combining the aluminum sites ($Al^-$) in the zeolite with iron ions ($Fe^{3+}$). The zeolite has undergone the ion-exchange for the purpose of causing NOx reduction reaction.

The aluminum sites of the zeolite are required to undergo ion-exchange by using a larger amount of iron ions. Typically, when the zeolite raw material is subjected to ion-exchange, the iron ions ($Fe^{3+}$) may not be sufficiently fixed to the aluminum sites ($Al^-$). Thus, in a subsequent heat treatment, the iron ions ($Fe^{3+}$) may turn into iron oxide ($Fe_2O_3$), such that iron oxide is formed on the zeolite particles.

When the iron ions ($Fe^{3+}$) are formed on the zeolite particles as iron oxide ($Fe_2O_3$), the iron ions ($Fe^{3+}$) cannot contribute to the NOx conversion reaction. Accordingly, a honeycomb structural body (honeycomb unit) that is formed with such a raw material may have low NOx conversion efficiency.

Given such a background, the inventors of the present invention contrived the present invention by finding that the honeycomb structural body 100 may have relatively high NOx conversion efficiency if the honeycomb units 130 and the honeycomb structural body 100 are manufactured with the use of zeolite particles that have undergone a predetermined pretreatment. Accordingly, the present invention provides a method of manufacturing a honeycomb structural body including at least one honeycomb unit including plural cells extending from a first end face to a second end face in a longitudinal direction, the plural cells being partitioned by cell walls, the at least one honeycomb unit including zeolite particles that have undergone iron ion-exchange, the method including (a) a step of performing a heat treatment on the zeolite particles that have undergone the iron ion-exchange, the heat treatment being performed in a non-oxygenated atmosphere having a temperature within a range of 500 °C through 800 °C, to obtain heat-treated zeolite particles; (b) a step of forming at least one honeycomb molded body from a raw material including the heat-treated zeolite particles; and (c) a step of manufacturing the at least one honeycomb unit by firing the at least one honeycomb molded body.

In the manufacturing method according to the present invention, the zeolite particles in the prepared raw material have undergone a heat treatment in a non-oxygenated atmosphere having a temperature within a range of 500 °C through 800 °C. In this case, even if the zeolite particles in the prepared raw material have many iron ions ($Fe^{3+}$) that are not combined with aluminum sites ($Al^-$) of the zeolite, such iron ions ($Fe^{3+}$) are fixed to many aluminum sites ($Al^-$) in the zeolite as a result of the heat treatment. Thus, by manufacturing the honeycomb units with these zeolite particles that have undergone the heat treatment, the honeycomb units have an increased number of reaction sites (iron ion-exchange positions) that contribute to the NOx conversion reaction. Consequently, the resultant honeycomb units and honeycomb structural body have high NOx conversion performance.

A detailed description is given of a method of manufacturing a honeycomb structural body according to the present invention.

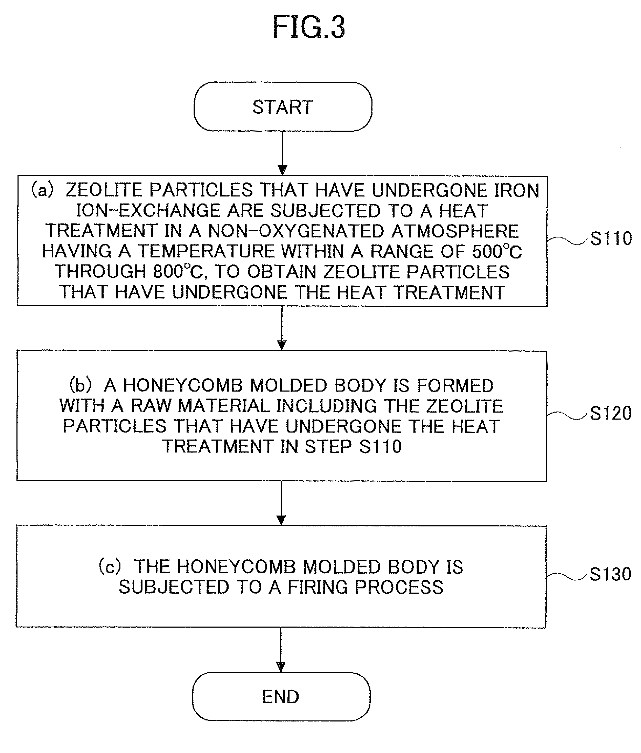

FIG. 3 is an example flowchart of a method of manufacturing a honeycomb structural body according to the present invention. The method of manufacturing a honeycomb structural body includes the following steps.

    (a) Zeolite particles that have undergone iron ion-exchange are subjected to a heat treatment in a non-oxygenated atmosphere having a temperature within a range of 500 °C through 800 °C, to obtain zeolite particles that have undergone the heat treatment (step S110).

    (b) A honeycomb molded body is formed with a raw material including the zeolite particles that have undergone the heat treatment (step S120).

    (c) The honeycomb molded body is subjected to a firing process, so that a honeycomb unit is manufactured (step S130).

Details of each of the above steps are given below.

(Step S110)

First, zeolite particles, which have undergone iron ion-exchange, are prepared. The zeolite particles may include free iron ions ($Fe^{3+}$) that are not combined with aluminum sites ($Al^-$) in the zeolite.

Next, the zeolite particles are subjected to a heat treatment in a non-oxygenated atmosphere (an atmosphere in which the oxygen partial pressure is less than or equal to 0.1%). The non-oxygenated atmosphere includes an inert gas atmosphere such as a nitrogen atmosphere and an argon atmosphere, and a vacuum environment. The temperature of the heat treatment is preferably within a range of 500 °C through 800 °C, more preferably in a range of 700°C through 750 °C. The duration of the heat treatment is preferably 0.5 hours through 5 hours.

Accordingly, the free iron ions ($Fe^{3+}$) in the zeolite particles are combined with the aluminum sites ($Al^-$).

Before performing the heat treatment, a drying process is preferably performed; however, when the drying process is not performed, the heat treatment is preferably performed at 120 °C through 250 °C for 3 hours through 24 hours.

(Step S120)

Next, a honeycomb molded body is formed with a raw material including the zeolite particles that have undergone the heat treatment.

First, the zeolite particles that have undergone the heat treatment are mixed with an inorganic binder to prepare a raw material paste.

Examples of the inorganic binder are alumina sol, silica sol, titania sol, liquid glass, white clay, kaolin, montmorillonite, sepiolite, attapulgite, boehmite, or the like. These can be used alone or in combination.

The inorganic binder is preferably at least one kind selected from a group consisting of alumina sol, silica sol, titania sol, liquid glass, sepiolite, attapulgite, and boehmite.

The lower limit of the amount of zeolite included in a honeycomb unit is preferably 30 wt%, more preferably 40 wt%, and still more preferably 50 wt%. Meanwhile, the preferable upper limit is 90 wt%, more preferably 80 wt%, and still more preferably 75 wt%. If the content of zeolite were less than 30 wt%, the amount of zeolite that can contribute to converting $NO_x$ may become relatively small. Meanwhile, if the content of zeolite exceeds 90 wt%, the strength of the honeycomb unit may be reduced.

The amount of the inorganic binder included in a honeycomb unit as solids content is preferably more than or equal to 5 wt%, more preferably more than or equal to 10 wt%, and still more preferably more than or equal to 15 wt%. Meanwhile, the amount of the inorganic binder included in a honeycomb unit as solids content is preferably less than or equal to 50 wt%, more preferably less than or equal to 40 wt%, and still more preferably less than or equal to 35 wt%. If the content of the inorganic binder as solids content were less than 5 wt%, the strength of the manufactured honeycomb unit may be reduced. Meanwhile, if the content of the inorganic binder as solids content exceeds 50 wt%, the moldability of the raw material composition may be degraded.

Furthermore, according to need, inorganic fiber and/or an inorganic flaky substance may be added to the raw material paste.

Examples of inorganic fiber materials are alumina, silica, silicon carbide, silica alumina, glass, potassium titanate, aluminum borate and the like. These can be used alone or in combination.

An inorganic flaky substance is different from inorganic fiber. The inorganic flaky substance is an inorganic additive that has a flaky shape. The inorganic flaky substance preferably has a thickness within a range of 0.2 $\mu$m through 5 $\mu$m, a maximum length within a range of 10 $\mu$m through 160 $\mu$m, and an aspect ratio (thickness/maximum length) within a range of 3 through 250. The thickness and the maximum length of the inorganic flaky substance are average values obtained from SEM photographs. The thickness of the inorganic flaky substance is the average value obtained from twenty inorganic flaky substances. The maximum length of the inorganic flaky substance is the average value obtained from twenty inorganic flaky substances, based on a maximum diameter when the inorganic flaky substance is approximated to a flat particle.

The inorganic flaky substances are preferably at least one kind selected from a group consisting of glass flakes, mica flakes, alumina flakes, silica flakes, and zinc oxide flakes.

The inorganic fiber or inorganic flaky substances function as strength reinforcement materials, so that the strength of the honeycomb unit is increased.

When a honeycomb unit includes inorganic fiber and inorganic flaky substances, the lower limit of the total amount of inorganic fiber and inorganic flaky substances in a honeycomb unit is preferably 3 wt%, more preferably 5 wt%, and still more preferably 8 wt%. Meanwhile, the preferable upper limit is 50 wt%, more preferably 40 wt%, and still more preferably 30 wt%. If the total amount of inorganic fiber and inorganic flaky substances were less than 3 wt%, the strength of the honeycomb unit is insufficient. Meanwhile, if the total amount of inorganic fiber and inorganic flaky substances exceeds 50 wt%, the amount of zeolite that can contribute to converting $NO_x$ may become relatively small.

Other than the above components, an organic binder, a dispersion medium, and a molding aid may be appropriately added to the raw material paste, according to the moldability. As the organic binder, one or more organic binders may be selected from methylcellulose, carboxyl methylcellulose, hydroxyethylcellulose, polyethylene glycol, phenolic plastic, epoxy resin, or the like, although not particularly limited thereto. The blending quantity of the organic binder is preferably 1 part by weight through 10 parts by weight with respect to a total of 100 parts by weight of inorganic particles, an inorganic binder, inorganic fiber, and inorganic flaky substances.

Examples of the dispersion medium are water, an organic solvent (e.g., benzene), alcohol (methanol) and the like, although not particularly limited thereto. Examples of the molding aid are ethylene glycol, dextrin, fatty acid, fatty acid soap, polyalcohol and the like, although not particularly limited thereto.

The raw material paste is preferably mixed by using a mixer, an attritor or the like to mix it, and is also preferably kneaded by using a kneader or the like to sufficiently knead it, although not particularly limited thereto. For example, an extrusion molding method is a preferable method for molding the raw material paste into a shape having cells, although the method is not particularly limited thereto.

Next, the resultant honeycomb molded body is dried to manufacture a honeycomb dried body. Examples of a drying apparatus used for the drying process are a microwave drying apparatus, a hot air drying apparatus, a dielectric drying apparatus, a suction drying apparatus, a vacuum drying apparatus, a freeze drying apparatus and the like, although not particularly limited thereto.

The resultant honeycomb dried body is preferably degreased. The degreasing conditions are preferably approximately 400 °C for two hours, although these conditions are not particularly limited thereto; the conditions are to be appropriately selected depending on the kind and amount of the organic substances included in the molded body.

(Step S130)

Next, the honeycomb degreased body formed in the above step is fired to manufacture a honeycomb unit (honeycomb fired body). The firing conditions are preferably 600 °C through 1,200 °C, more preferably 700 °C through 1,000 °C, although not particularly limited thereto. This is because if the firing temperature were less than 600 °C, the sintering would not progress, and therefore the honeycomb unit may have a low level of strength; if the firing temperature exceeds 1,200 °C, the sintering would progress excessively, and therefore the exhaust gas conversion efficiency may be reduced.

The cell density of the honeycomb unit 130 is preferably within a range of 15.5 cells/cm$^2$ through 186 cells/cm$^2$ (100 cpsi through 1,200 cpsi), more preferably within a range of 46.5 cells/cm$^2$ through 170 cells/cm$^2$ (300 cpsi through 1,100 cpsi), and still more preferably within a range of 62.0 cells/cm$^2$ through 155 cells/cm$^2$ (400 cpsi through 1,000 cpsi). The thickness of the cell walls 123 of the honeycomb unit 130 is not particularly limited; however, the preferable lower limit is 0.1 mm in consideration of the strength, and the preferable upper limit is 0.4 mm in consideration of NOx conversion performance.

Next, a paste for adhesive layers which later becomes the adhesive layers is applied onto the side surfaces of honeycomb units formed by the above steps, in such a manner as to have uniform thicknesses. Sequentially, the honeycomb units are stacked onto each other with adhesive layers interposed therebetween. This procedure is repeated to manufacture an assembly of honeycomb units of a desired size (for example, with four horizontal rows and four vertical rows of honeycomb units).

As the paste for adhesive layers, it is possible to use a mixture of inorganic particles and an inorganic binder, a mixture of an inorganic binder and inorganic fiber, a mixture of inorganic particles, an inorganic binder and an inorganic fiber, or the like, although not particularly limited thereto. It is also possible to add an organic binder to this paste for adhesive layers. The above-described inorganic flaky substances may be added to the paste for adhesive layers.

As the inorganic particles, the inorganic binder, the inorganic fiber, and the inorganic flaky substances, the same materials as those used to form the honeycomb unit described above may be used. As an example of the organic binder, one or more kinds of organic binder may be selected from polyvinyl alcohol, methylcellulose, ethyl cellulose, carboxyl methylcellulose, or the like, although not particularly limited thereto.

The thickness of the adhesive layer for joining the honeycomb units is preferably 0.3 mm through 2 mm. If the thickness of the adhesive layer were less than 0.3 mm, the bonding strength may not be sufficient. If the thickness exceeds 2 mm, the pressure loss may be large. The number of honeycomb units to be joined together is appropriately selected according to the size of the honeycomb structural body.

Next, the assembly of honeycomb units is heated to dry and solidify the paste for adhesive layers, thereby forming the adhesive layers and fixing together the honeycomb units.

Next, a diamond cutter is used to cut the assembly of honeycomb units into a cylindrical shape. A paste for coat layer which later becomes a coat layer is applied to the peripheral surface (side surface). Then, the paste for coat layer is dried and solidified to form a coat layer. Accordingly, a honeycomb structural body having the required peripheral shape is manufactured.

The paste for coat layer may have the same composition as that of the paste for adhesive layers described above. The thickness of the coat layer is preferably 0.1 mm through 2.0 mm.

By performing the above steps, the honeycomb structural body 100 shown in FIG. 1 is manufactured.

The above describes a method of manufacturing an example of the honeycomb structural body 100 that is formed by joining together plural honeycomb units 130 by interposing the adhesive layers 150. However, the configuration of the honeycomb structural body is not so limited.

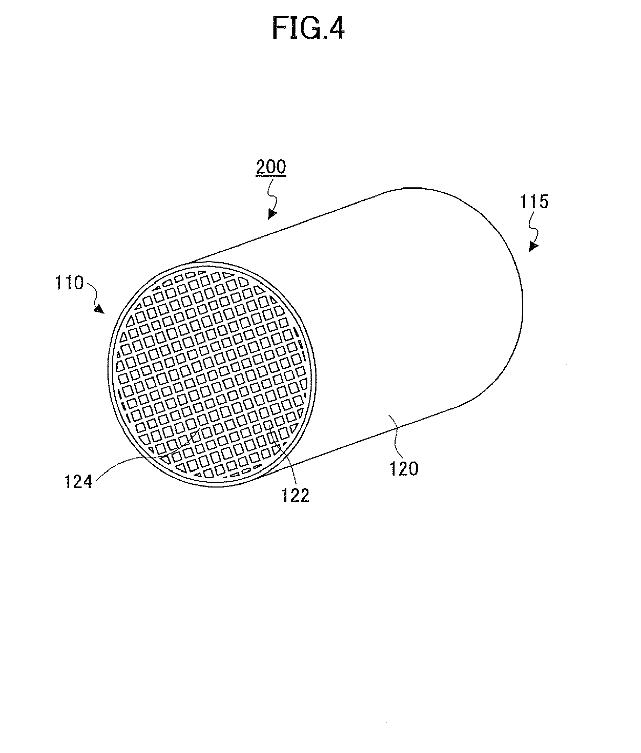

FIG. 4 illustrates other example of a honeycomb structural body. As shown in FIG. 4, a honeycomb structural body 200 is formed of a single honeycomb unit in which plural cells 122, which are partitioned by cell walls 124, are arranged in a longitudinal direction. In the example shown in FIG. 4, the coat layer 120 is applied on the peripheral surface of the honeycomb structural body 200; however, this coat layer 120 may or may not be applied. It is obvious to those skilled in the art that the manufacturing method according to the present invention is also applicable to the honeycomb structural body 200 having the above configuration.

[Examples]

In the following, the present invention is described in detail with examples.

(Example 1)

Zeolite particles (particle size 2 $\mu$m) that have undergone iron ion-exchange were retained in a temperature of 200 °C for 12 hours and dried. Next, the zeolite particles were subjected to a heat treatment in a non-oxygenated atmosphere having an oxygen density of 0.1%. The heat treatment was performed at 700 °C for two hours.

Next, a mixed composition was obtained by mixing together and kneading 3000 parts by weight of the zeolite particles that have undergone the heat treatment, 650 parts by weight of alumina fiber, 840 parts by weight of an inorganic binder (boehmite), 330 parts by weight of an organic binder (methylcellulose), 330 parts by weight of a lubricant (oleic acid), and 1800 parts by weight of ion-exchange water.

Next, honeycomb molded bodies were extruded from the mixed composition with an extrusion molding apparatus, and the honeycomb molded bodies were sufficiently dried with a microwave drying apparatus and a hot air drying apparatus, so that pillar-shaped honeycomb molded bodies as shown in FIG. 2 were formed.

Subsequently, the honeycomb molded bodies were degreased at 400 C° for two hours. Then, the honeycomb molded bodies were fired at 700 C° for two hours. Accordingly, honeycomb units shaped as rectangular pillars were formed (length 34.3 mm x width 34.3 mm x height 150 mm). The thickness of the cell walls 123 of the honeycomb unit was 0.23 mm. The cell density was 93 cells/cm$^2$.

Next, on the side surfaces of 16 honeycomb units, a paste for adhesive layers was applied, and an assembly of honeycomb units (four horizontal rows and four vertical rows) was formed.

The paste for adhesive layers was prepared by mixing together and kneading 59.1 wt% of silica having an average particle size of 2 $\mu$m, 18.1 wt% of alumina fiber having an average fiber diameter of 6 $\mu$m, 14.2 wt% of silica sol including solids content of 30 weight % as a solid component including an inorganic binder, 0.4 wt% of carboxyl methylcellulose as an organic binder, 3.9 wt% of a water retention agent (polyvinyl alcohol), 3.9 wt% of a surface-active agent, and 0.4 wt% of a foaming agent (alumina balloons).

The thickness of the adhesive layers formed by paste was 2 mm.

Next, the assembly of honeycomb units was heated at 150 °C to dry and solidify the paste for adhesive layers, and the adhesive layers were formed and the honeycomb units were joined to each other. Subsequently, a diamond cutter was used to cut the assembly of honeycomb units into a cylindrical shape, and a cylindrical honeycomb structural body, having a diameter of 141.8 mm and a total length of 150 mm, was manufactured.

Next, a paste for coat layer which later becomes a coat layer was applied to the peripheral surface (side surface) of the honeycomb structural body, thus forming a coat layer having a thickness of 1 mm. The paste for coat layer was dried and solidified and a coat layer was formed. The same paste as the paste for adhesive layers was used as the paste for coat layer.

By performing the above procedure, a cylindrical honeycomb structural body (honeycomb structural body of example 1) was manufactured, having a diameter of 143.8 mm and a total length of 150 mm as shown in FIG. 1.

(Example 2)

A honeycomb structural body according to example 2 was manufactured by the same procedures as that of example 1. However, in example 2, after the zeolite particles that have undergone iron ion-exchange (particle sizes 2 $\mu$m) were retained in a temperature of 200 °C for 12 hours and dried, the zeolite particles were subjected to a heat treatment in a non-oxygenated atmosphere having an oxygen density of 0.05%. The other manufacturing conditions were the same as those of example 1.

(Example 3)

A honeycomb structural body according to example 3 was manufactured by the same procedures as that of example 1. However, in example 3, after the zeolite particles that have undergone iron ion-exchange (particle sizes 2 μm) were retained in a temperature of 200 °C for 12 hours and dried, the zeolite particles were subjected to a heat treatment at 500 °C for two hours. The other manufacturing conditions were the same as those of example 1.

(Example 4)

A honeycomb structural body according to example 4 was manufactured by the same procedures as that of example 1. However, in example 4, after the zeolite particles that have undergone iron ion-exchange (particle sizes 2 μm) were retained in a temperature of 200 °C for 12 hours and dried, the zeolite particles were subjected to a heat treatment at 800 °C for two hours. The other manufacturing conditions were the same as those of example 1.

(Comparative example 1)

A honeycomb structural body according to comparative example 1 was manufactured by the same procedures as that of example 1. However, in comparative example 1, the zeolite particles that have undergone iron ion-exchange (particle sizes 2 μm) were directly used as the raw material (i.e., a drying process and a heat treatment were not performed). The other manufacturing conditions were the same as those of example 1.

Table 1 indicates the drying and heating conditions of the zeolite particles that have undergone iron ion-exchange for the respective examples and the comparative example.

| | PRETREATMENT OF ZEOLITE PARTICLES | | | CONVERSION EFFICIENCY (%) |
| | HEAT TREATMENT CONDITIONS | | | |
| | OXYGEN DENSITY (%) | TEMPERATURE (°C) | TIME (hr) | |
|---|---|---|---|---|
| EXAMPLE 1 | 0.1 | 700 | 2 | 60 |
| EXAMPLE 2 | 0.05 | 700 | 2 | 58 |
| EXAMPLE 3 | 0.1 | 500 | 2 | 58 |
| EXAMPLE 4 | 0.1 | 800 | 2 | 56 |
| COMPARATIVE EXAMPLE 1 | - | - | - | 43 |

mm) and used as evaluation samples. The evaluation samples were used to evaluate the NOx conversion performance.

The NOx conversion performance was evaluated by using test gas, which is simulated gas based on driving conditions of a diesel engine of an automobile. The test gas was made to flow through the honeycomb units, NOx processing was performed, and the amount of NO (nitric oxide) included in the gas discharged from the honeycomb structural body was measured.

The composition of the test gas included 175 ppm of nitric oxide, 175 ppm of nitrogen dioxide, 350 ppm of ammonia, 14 volume % of oxygen, 5 volume % of carbon dioxide, 10 volume % of water, and nitrogen (balance).

The NOx conversion performance was continued until the NO density in the test gas discharged from the honeycomb structural body did not change much any longer (before and after flowing through the honeycomb structural body). An apparatus (MEXA-7100D) manufactured by HORIBA was used for measuring the NO density. The detection limit of NO of this apparatus was 0.1 ppm. The detection temperature was 200 °C, which was fixed while the test was being performed.

A NOx conversion efficiency "N" was calculated from the measurement results. The NOx conversion efficiency "N" was calculated by formula (3).

$$N\ (\%) =$$

$$\{(NO\ density\ in\ mixed\ gas\ before\ being\ injected\ in$$

$$evaluation\ sample\ -$$

$$NO\ density\ in\ exhaust\ gas\ discharged\ from$$

$$evaluation\ sample)\}/$$

$$(NO\ density\ in\ mixed\ gas\ before\ being$$

$$injected\ in\ evaluation\ sample) \times 100$$

$$formula\ (3)$$

The evaluation results of the NOx conversion performance are indicated in the right column of table 1. Based on these results, it is found that the honeycomb structural bodies (examples 1 through 4) according to the present invention have high NOx conversion efficiency compared to the honeycomb structural body according to comparative example 1.

**Claims**

1. A method of manufacturing a honeycomb structural body including at least one honeycomb unit including plural cells extending from a first end face to a second end face in a longitudinal direction, the plural cells being partitioned by cell walls, the at least one honeycomb unit including zeolite particles that have undergone iron ion-exchange, the method comprising:

   (a) a step of performing a heat treatment on the zeolite particles that have undergone the iron ion-exchange, the heat treatment being performed in a non-oxygenated atmosphere having a temperature within a range of 500 °C through 800 °C, to obtain heat-treated zeolite particles;
   (b) a step of forming at least one honeycomb molded body from a raw material including the heat-treated zeolite particles; and
   (c) a step of manufacturing the at least one honeycomb unit by firing the at least one honeycomb molded body.

2. The method according to claim 1, wherein the non-oxygenated atmosphere is a nitrogen atmosphere.

3. The method according to claim 1 or 2, wherein
   the step (c) is performed at a temperature within a range of 700 °C through 1000 °C.

4. The method according to any one of claims 1 through 3, wherein
   the raw material further includes an inorganic binder, and, at least one of inorganic fiber and inorganic flaky substances.

5. The method according to claim 4, wherein
   the inorganic binder includes at least one kind selected from a group consisting of alumina sol, silica sol, titania sol, liquid glass, sepiolite, attapulgite, and boehmite.

6. The method according to claim 4 or 5, wherein
   the inorganic fiber is at least one kind selected from a group consisting of alumina, silica, silicon carbide, silica alumina, glass, potassium titanate, and aluminum borate.

7. The method according to any one of claims 4 through 6, wherein
   the inorganic flaky substances are at least one kind selected from a group consisting of glass flakes, mica flakes, alumina flakes, silica flakes, and zinc oxide flakes.

**8.** The method according to any one of claims 1 through 7, further comprising:

(d) a step of forming an assembly having a predetermined shape by joining together plural of the honeycomb units by interposing adhesive layers, which is performed after the step (c).

**9.** The method according to any one of claims 1 through 7, wherein
the honeycomb structural body is formed with a single honeycomb unit.

**Patentansprüche**

**1.** Verfahren zur Herstellung eines Wabenstrukturkörpers, enthaltend mindestens eine Wabeneinheit, enthaltend eine Mehrzahl von Zellen, sich erstreckend von einer ersten Endfläche zu einer zweiten Endfläche in einer Längsrichtung, wobei die Mehrzahl von Zellen durch Zellwände aufgeteilt sind, wobei die mindestens eine Wabeneinheit Zeolithteilchen enthält, die Eisen-Ionenaustausch unterzogen wurden, das Verfahren umfassend:

(a) einen Schritt des Durchführens einer Wärmebehandlung der Zeolithteilchen, die dem Eisen-Ionenaustausch unterzogen wurden, wobei die Wärmebehandlung in einer nicht mit Sauerstoff angereicherten Atmosphäre mit einer Temperatur in einem Bereich von 500°C bis 800°C durchgeführt wird, um wärmebehandelte Zeolithteilchen zu erhalten;
(b) einen Schritt des Bildens mindestens eines Wabenformkörpers aus einem die wärmebehandelten Zeolithteilchen enthaltenden Rohmaterial; und
(c) einen Schritt der Herstellung der mindestens einen Wabeneinheit durch Brennen des mindestens einen Wabenformkörpers.

**2.** Verfahren nach Anspruch 1, wobei die nicht mit Sauerstoff angereicherte Atmosphäre eine Stickstoffatmosphäre ist.

**3.** Verfahren nach Anspruch 1 oder 2, wobei der Schritt (c) bei einer Temperatur in einem Bereich von 700°C bis 1000°C durchgeführt wird.

**4.** Verfahren nach einem der Ansprüche 1 bis 3, wobei das Rohmaterial weiter ein anorganisches Bindemittel und mindestens eines aus anorganischer Faser und anorganischen plättchenförmigen Substanzen enthält.

**5.** Verfahren nach Anspruch 4, wobei das anorganische Bindemittel mindestens eine Art, ausgewählt aus einer Gruppe, bestehend aus Aluminiumoxidsol, Silicasol, Titanoxidsol, flüssiges Glas, Sepiolith, Attapulgit und Böhmit, enthält.

**6.** Verfahren nach Anspruch 4 oder 5, wobei die anorganische Faser mindestens eine Art, ausgewählt aus einer Gruppe, bestehend aus Aluminiumoxid, Silica, Siliziumcarbid, Silica-Aluminiumoxid, Glas, Kaliumtitanat und Aluminiumborat, ist.

**7.** Verfahren nach einem der Ansprüche 4 bis 6, wobei die anorganischen plättchenförmigen Substanzen mindestens eine Art, ausgewählt aus einer Gruppe, bestehend aus Glasplättchen, Glimmerplättchen, Aluminiumoxidplättchen, Silicaplättchen und Zinkoxidplättchen, sind.

**8.** Verfahren nach einem der Ansprüche 1 bis 7, weiter umfassend:

(d) einen Schritt des Bildens einer Anordnung mit einer vorbestimmten Form durch miteinander Verbinden einer Mehrzahl von den Wabeneinheiten durch Dazwischeneinfügen von Haftmittelschichten, der nach dem Schritt (c) durchgeführt wird.

**9.** Verfahren nach einem der Ansprüche 1 bis 7, wobei der Wabenstrukturkörper mit einer einzelnen Wabeneinheit gebildet wird.

**Revendications**

**1.** Procédé de préparation d'un corps structurel en nid d'abeille, comprenant au moins une unité en nid d'abeille comprenant plusieurs cellules s'étendant d'une première face d'extrémité à une deuxième face d'extrémité en direction longitudinale, les différentes cellules étant formées par des parois cellulaires, l'au moins une unité en nid d'abeille comprenant des particules de zéolite qui ont subi un échange d'ions de fer, le procédé comprenant :

(a) une étape de réalisation d'un traitement thermique sur les particules de zéolite, qui ont subi l'échange d'ions de fer, le traitement thermique étant effectué dans une atmosphère non oxygénée ayant une température située dans l'intervalle allant de 500°C à 800°C, pour obtenir des particules de zéolite thermotraitées ;
(b) une étape de formation d'au moins un corps moulé en nid d'abeille à partir d'une matière première comprenant les particules de zéolite thermotraitées ;
(c) une étape de préparation de la au moins une unité en nid d'abeille par cuisson du au moins un corps moulé en nid d'abeille.

2. Procédé selon la revendication 1, où l'atmosphère non oxygénée est une atmosphère d'azote.

3. Procédé selon la revendication 1 ou 2, où l'étape (c) est réalisée à une température située dans l'intervalle allant de 700°C à 1000°C.

4. Procédé selon l'une quelconque des revendications 1 à 3, où la matière première comprend en outre, un liant inorganique, et au moins l'une parmi des substances de type fibre inorganique et de type floconneux inorganique.

5. Procédé selon la revendication 4, où le liant inorganique comprend au moins un type choisi parmi le groupe consistant en un sol d'alumine, un sol de silice, un sol de titane, un verre liquide, la sépiolite, l'attapulgite et la boéhmite.

6. Procédé selon la revendication 4 ou 5, où la fibre inorganique est au moins un type choisi parmi le groupe consistant en l'alumine, la silice, le carbure de silicium, la silice-alumine, le verre, le titanate de potassium et le borate d'aluminium.

7. Procédé selon l'une quelconque des revendications 4 à 6, où les substances de type floconneux inorganique sont au moins un type choisi parmi le groupe consistant en les flocons en verre, les flocons en mica, les flocons en alumine, les flocons en silice, et les flocons en oxyde de zinc.

8. Procédé selon l'une quelconque des revendications 1 à 7, comprenant en outre :

(d) une étape de formation d'un ensemble ayant une forme prédéterminée par jonction de plusieurs des unités en nid d'abeille par interposition de couches adhésives, qui est réalisée après l'étape (c).

9. Procédé selon l'une quelconque des revendications 1 à 7, où le corps structurel en nid d'abeille est formé d'une seule unité en nid d'abeille.

# FIG.1

# FIG.2

# FIG.3

START

(a) ZEOLITE PARTICLES THAT HAVE UNDERGONE IRON ION-EXCHANGE ARE SUBJECTED TO A HEAT TREATMENT IN A NON-OXYGENATED ATMOSPHERE HAVING A TEMPERATURE WITHIN A RANGE OF 500°C THROUGH 800°C, TO OBTAIN ZEOLITE PARTICLES THAT HAVE UNDERGONE THE HEAT TREATMENT ⌇S110

(b) A HONEYCOMB MOLDED BODY IS FORMED WITH A RAW MATERIAL INCLUDING THE ZEOLITE PARTICLES THAT HAVE UNDERGONE THE HEAT TREATMENT IN STEP S110 ⌇S120

(c) THE HONEYCOMB MOLDED BODY IS SUBJECTED TO A FIRING PROCESS ⌇S130

END

# FIG.4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S61171539 B
- JP 2007315328 A